# EUROPÄISCHE PATENTSCHRIFT

(11) **EP 3 375 024 B1**
(45) Veröffentlichungstag und Bekanntmachung des Hinweises auf die Patenterteilung: **04.09.2019**
(21) Anmeldenummer: 16788479.0
(22) Anmeldetag: 21.10.2016
(51) Int. Cl.: H01M 2/10, H01M 10/625, H01M 10/6556, H01M 10/6568, H01M 10/613, B60L 3/00, B60L 58/26, B60L 50/64

(54) **ENERGIESPEICHEREINRICHTUNG**
ENERGY STORAGE DEVICE
DISPOSITIF ACCUMULATEUR D'ÉNERGIE

(30) Priorität: 10.11.2015 DE 102015222138
(43) Veröffentlichungstag der Anmeldung: 19.09.2018
(73) Patentinhaber: Audi AG, 85045 Ingolstadt (DE)
(72) Erfinder: GLASS, Thomas, 84048 Mainburg (DE)
(86) Internationale Anmeldenummer: PCT/EP2016/075445
(87) Internationale Veröffentlichungsnummer: WO 2017/080798

(56) Entgegenhaltungen:
- JP-A- 2008 059 950
- US-A1- 2004 194 489
- US-A1- 2011 304 297
- US-A1- 2014 234 687

## Beschreibung

Die Erfindung betrifft eine Energiespeichereinrichtung in Form einer Hochvoltbatterie umfassend ein Gehäuse mit einer oder mehreren darin aufgenommenen Speicherzellen oder Speicherzellenmodulen sowie eine oder mehrere Kühlmittelleitungen, durch die ein über einen Kühlmittelkreislauf strömendes Kühlmittel fließt.

Derartige Energiespeichereinrichtungen werden beispielsweise für Kraftfahrzeuge vorgesehen, um einen Elektroantrieb zu realisieren. Bei dem Kraftfahrzeug kann es sich um ein reines Elektrofahrzeug oder ein Hybridfahrzeug umfassend einen Elektroantrieb sowie einen Verbrennungsmotorantrieb handeln. Derartige Energiespeichereinrichtungen werden, da sie in der Regel Spannungen von mehreren 100 V liefern, auch Hochvoltbatterien genannt. Aus dem Stand der Technik bekannte Kühlvorrichtungen für Energiespeicher sind in den Druckschriften US 2004/194489 A1, JP 2008 059950 A, US 2014/234687 A1 und US 2011/304297 A1 beschrieben.

Da sich eine solche Energiespeichereinrichtung im Betrieb erwärmt ist es erforderlich, sie zu kühlen. Hierzu wird entweder Luft verwendet, oder ein fluides Kühl- oder Kältemittel, beispielsweise auch in Form eines Wasser-Glykol-Gemischs. Bei Verwendung solcher fluider Kältemittel, insbesondere bei Verwendung eines Wasser-Glykol-Gemisches, sind aufgrund der elektrischen Leitfähigkeit Undichtigkeiten innerhalb des Gehäuses, in dem die Speicherzellen oder Speicherzellenmodule aufgenommen sind, zwingend zu vermeiden. Aus diesem Grund wird sorgsam darauf geachtet, dass Verbindungen der Kühlmittelleitungen im Inneren des Gehäuses vollkommen dicht sind. Denn im Falle einer Undichtigkeit kann es zu Kurzschlüssen innerhalb der Energiespeichereinrichtung, also der Hochvoltbatterie kommen, verbunden mit einem hohen Brandpotential. Zur Sicherstellung der Dichtheit der Leitungsverbindungen wird demzufolge ein hoher Aufwand betrieben, Probleme sind gleichwohl nicht gänzlich ausgeschlossen.

Der Erfindung liegt damit das Problem zugrunde, eine demgegenüber verbesserte Energiespeichereinrichtung in Form einer Hochvoltbatterie anzugeben. Die Erfindung wird durch den Gegenstand des Anspruchs 1 definiert. Bevorzugte Ausführungsformen sind in den abhängigen Ansprüchen angegeben.

Zur Lösung dieses Problems ist bei einer Energiespeichereinrichtung der eingangs genannten Art erfindungsgemäß vorgesehen, dass die eine oder die mehreren Kühlmittelleitungen in eine oder mehrere Wände des Gehäuses integriert sind und gehäuseseitig ununterbrochen von einem außerhalb des Gehäuses liegenden Zulaufanschluss zu einem ebenfalls außerhalb des Gehäuses liegenden Ablaufanschluss laufen.

Bei der erfindungsgemäßen Energiespeichereinrichtung sind sämtliche Leitungsverbindungen außerhalb des geschlossenen Gehäuses vorgesehen, so dass demzufolge Undichtigkeit im Gehäuseinneren nicht vorkommen können. Darüber hinaus sind die eine oder sind die mehreren Kühlmittelleitungen in eine oder mehrere Wände des Gehäuses integriert, sind also fester, untrennbarer Bestandteil des Gehäuses, so dass auch etwaige Leckagen über die Länge einer Kühlmittelleitung selbst ausgeschlossen sind. Besondere Vorkehrungen betreffend die Abdichtung von Verbindungsstellen sind daher über das normale Maß hinaus nicht zu treffen, da Leckagen im Gehäuseinneren von Haus aus ausgeschlossen sind. Damit sind auch etwaige hieraus resultierende Schwierigkeiten wir Kurzschlüsse und ähnliches wirkungsvoll vermieden.

Erfindungsgemäß ist vorgesehen, dass die eine oder die mehreren Kühlmittelleitungen durch Rohre gebildet sind, die in die eine oder die mehreren Wände vollständig eingebettet sind. Bei den Rohren kann es sich je nach Material der Wand oder Wände um Kunststoff- oder Metallrohre handeln. Sind die Gehäusewände aus Kunststoff, so werden erfindungsgemäß sowohl Kunststoff- als auch Metallrohre verwendet, die in einem entsprechenden Gieß- oder Spritzvorgang vollständig in die aus Kunststoff gefertigte Wand eingebettet sind. Ist die oder sind die Wände aus Metall, was zur Bildung von Hochvolt-Batteriegehäusen zumeist üblich ist, so werden erfindungsgemäß ebenfalls entsprechende metallische Rohre verwendet, die in das Wandmaterial eingegossen werden.

Die Rohre können gemäß einer ersten Erfindungsvariante U-förmig in der Wand verlaufen und nur an einer Seite münden, wobei das eine Rohrende einen Zulaufanschluss und das andere Rohrende einen Ablaufanschluss bildet, wobei die Rohrenden zweier, vorzugsweise benachbarter, Rohre über außerhalb des Gehäuses angeordnete Verbindungsrohrstücke miteinander verbunden sind. Sämtliche Rohrenden münden also an einer gemeinsamen Wandseite, wobei die Rohre im Wesentlichen parallel zur anderen Wandseite verlaufen, wo sie über eine U-förmige Biegung wieder zurückgeführt sind. Die Verbindungsrohrstücke sind folglich nur an einer Wandseite vorzusehen, wobei die einzelnen Rohrenden mäanderförmig über die Verbindungsrohrstücke miteinander verbunden sind, so dass sich eine mäandernde Kühlrohrschlange innerhalb der Wand ausbildet. Die Verbindungsrohrstücke können aus Metall oder Kunststoff sein, wobei sie nicht zwingend aus dem gleichen Material sind wie die in der Wand eingebetteten Rohre.

Alternativ kann gemäß einer zweiten Erfindungsvariante vorgesehen sein, dass die Rohre geradlinig in der Wand verlaufen und beidseits münden, wobei das eine Rohrende einen Zulaufanschluss und das andere Rohrende einen Ablaufanschluss bildet, wobei die Rohrenden zweier, vorzugsweise benachbarter, Rohre über außerhalb des Gehäuses angeordnete Verbindungsrohrstücke miteinander verbunden sind. Hier laufen sämtliche Rohre nur geradlinig innerhalb der jeweiligen Wand und münden an beiden Seiten, so dass an beiden Wandseiten entsprechende Verbindungsrohrstücke anzuordnen sind. Diese sind zur Bildung einer mäanderförmig durchlaufenden Kühlrohrschlagen versetzt zueinander positioniert. Jedes Verbindungsrohr verbindet ein Rohrende eines ersten Rohres z. B. mit dem benachbarten Rohrende eines benachbarten Rohres, wobei das eine Rohrende einen Ablaufanschluss und das andere Rohrende einen Zulaufanschluss bildet, so dass das aus dem einen Rohr austretende Kühlmittel über das Verbindungsrohr in das andere Rohrende einströmen kann. An der gegenüberliegenden Wandseite ist eine entsprechende weiterführende Verbindung über ein Verbindungsrohrstück realisiert, so dass sich eine Kühlrohrschlage ergibt.

Nicht erfindungsgemäß ist es alternativ zur Verwendung von separaten Rohren, die in das Wandmaterial eingegossen respektive eingebettet sind, auch denkbar, die Wände mittels Strangpressprofilen mit einem oder mehreren Hohlräumen zu bilden, wobei der oder die Hohlräume die Kühlmittelleitungen bilden. Gemäß dieser Ausgestaltung werden also zur Bildung der Kühlwände Strangpressprofile verwendet, also plattenförmig gepresste Profile, die eine oder mehrere Hohlräume aufweisen, durch die das Kühlmittel strömt. Ähnlich wie bei der Ausbildung der mit Rohren versehenen Wände ist es natürlich nur erforderlich, diejenigen Wände mit Strangpressprofilen zu bilden, die gekühlt werden sollen. Bei den Strangpressprofilen kann es sich wiederum um solche aus Kunststoff oder Metall handeln, wobei insbesondere für Hochvoltbatterien zur Sicherstellung einer hinreichenden Gehäusestabilität metallene Strangpressprofile verwendet werden.

Die Hohlräume laufen herstellungsbedingt geradlinig durch das Strangpressprofil, sie enden also an beiden Wandseiten, wobei das eine Hohlraumende auch hier einen Zulaufanschluss und das andere Hohlraumende einen Ablaufanschluss bildet. Wiederum sind die Hohlraumenden zweier Hohlräume über außerhalb des Gehäuses angeordnete Verbindungsrohrstücke miteinander verbunden, so dass auch bei Verwendung eines solchen Strangpressprofils eine mäanderförmig durch die Wand laufenden Kühlmittelleitungsschlange gebildet werden kann. Auch hier können als Verbindungsrohrstücke solche aus Kunststoff oder Metall verwendet werden, wobei sich wiederum die Materialart der Verbindungsrohrstücke von der des Strangpressprofils unterscheiden kann.

Zur Bildung einer größeren Energiespeichereinrichtung wird häufig ein Gehäuse mit mehreren Ebenen, in denen jeweils ein oder mehrere Speicherzellen oder Speicherzellenmodule angeordnet sind, verwendet. Erfindungsgemäß sind nun in jeder Ebene eine oder mehrere Kühlmittelleitungen vorgesehen, die wiederum außerhalb des Gehäuses miteinander mit dem Kühlmittelkreislauf verbunden sind. Das heißt, dass letztlich jede Ebene aus wenigstens einer Wand beispielsweise mit vergossenen Rohren oder aus einem Strangpressprofil besteht, so dass eine entsprechende ebenenspezifische Kühlebene gegeben ist. Diese Wände mit ihren Kühlrohrschlangen sind gemeinsam in einen Kühlmittelkreislauf eingebunden, wobei die entsprechende Kühlmittelverteilung, über die das durch eine untere Ebene in eine darüber liegende Ebene zu führende Kühlmittel zwischen den Ebenen verteilt wird, ebenfalls außerhalb des Gehäuses vorgesehen ist, so dass folglich wiederum auch die der Kühlmittelverteilung zwischen den Ebenen dienenden Verbindungsstellen allesamt außerhalb des Gehäuses liegen.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer geöffneten Energiespeichereinrichtung nebst Kühlmittelkreislauf,
- Fig. 2: eine Aufsicht auf eine kühlbare Wand des Gehäuses der Energiespeichereinrichtung aus Fig. 1,
- Fig. 3: Fig. 3 eine perspektivische Teilansicht der Wand aus Fig. 2,
- Fig. 4: eine Aufsicht auf eine kühlbare Wand eines Gehäuses einer Energiespeichereinrichtung gemäß einer zweiten Ausführungsform,
- Fig. 5: eine Perspektivansicht einer kühlbaren Wand einer dritten Ausführungsform, und
- Fig. 6: eine Prinzipdarstellung einer mehrere Ebenen aufweisenden Energiespeichereinrichtung.

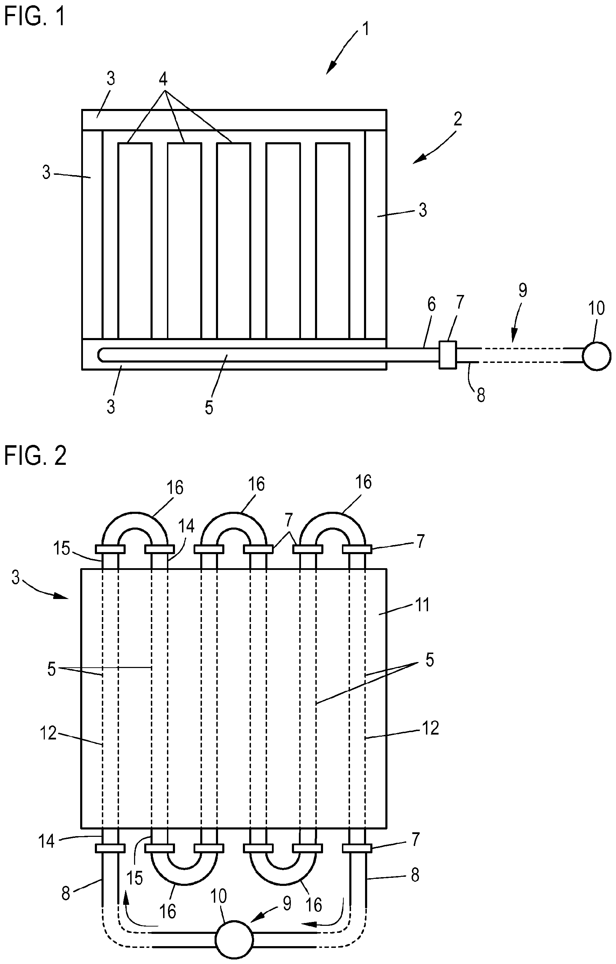

Fig. 1 zeigt eine Prinzipdarstellung einer erfindungsgemäßen Energiespeichereinrichtung 1, die hier zu Erläuterungszwecken geöffnet gezeigt ist. Sie umfasst ein Gehäuse 2 mit mehreren Wänden 3, die bevorzugt aus Metall bestehen. Im Inneren des Gehäuses 2 sind mehrere Speicherzellen oder Speicherzellenmodule 4 angeordnet und entsprechend verschaltet. Bei der Energiespeichereinrichtung 1 handelt es sich beispielsweise um eine Hochvoltbatterie für ein Kraftfahrzeug.

Eine der Wände 3, im gezeigten Beispiel die Bodenwand, ist aktiv kühlbar, wozu Kühlmittelleitungen 5 in der Wand integriert sind. Die Speicherzellen oder Speichermodule 4 sind thermisch mit dieser kühlbaren Bodenwand 3 verbunden. Die Kühlmittelleitungen 5 verlaufen in der Wand 3 ununterbrochen, also ohne irgendein Verbindungselement oder Koppelelement zu einem anderen Kühlmittelleitungsteil, und laufen von einem Zulaufanschluss zu einem Ablaufanschluss, die außerhalb des Gehäuses 2 liegen. Im gezeigten Beispiel ist ein solcher Zulaufanschluss 6 gezeigt, an dem über ein Verbindungselement 7 eine weitere Kühlmittelleitung 8 eines Kühlmittelkreislaufs 9, von dem zusätzlich eine Pumpe 10 gezeigt ist, angeschlossen ist. Dadurch, dass innerhalb des Gehäuses keinerlei Kühlmittelleitungen selbst verlaufen und keinerlei Verbindungsstellen gegeben sind, ist eine Leckage von Kühlmittel im Gehäuseinneren ausgeschlossen.

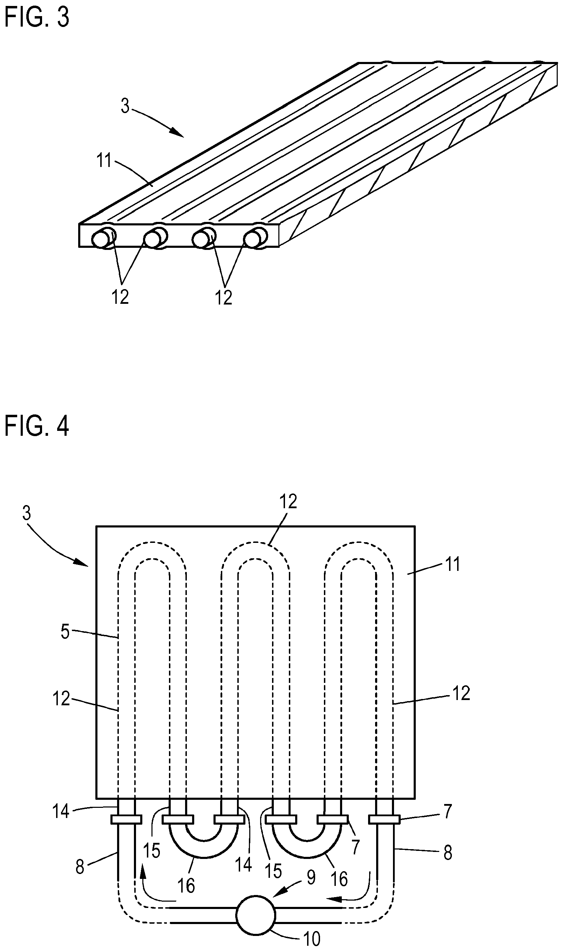

Fig. 2 zeigt in einer ersten Prinzipdarstellung eine Ausführungsform einer solchen Wand 3. Fig. 3 zeigt zusätzlich eine Perspektivansicht der Wand 3. Bei der Wand 3 handelt es sich wie beschrieben um einen Metallkörper 11, in dem im gezeigten Beispiel die Kühlmittelleitungen 5 durch eingebettete Rohre 12 aus Metall gebildet sind. Jedes Rohr 12 läuft geradlinig durch die Wand 3, also durch den Metallkörper 11, die Rohre liegen, wie Fig. 2 zeigt, parallel zueinander. Zur Herstellung der Wand 3 werden die Rohre in eine entsprechende Gießform gelegt, und anschließend mit dem den Metallkörper 11 bildenden Metall umgossen, so dass sich eine stabile Wand 3 mit integrierten Rohren ergibt. Denkbar wäre auch ein Sandwichaufbau aus zwei Metallplatten, zwischen denen die Rohre 12 fest verlegt bzw. angeordnet sind.

Im gezeigten Beispiel ragen die Rohre 12 etwas über die jeweiligen Stirnseiten der Wand hinaus, sie können dort aber auch bündig abschließen. Im gezeigten Beispiel sind die beiden außenliegenden Rohre 12 mit entsprechenden Kühlmittelleitungen 8 des Kühlmittelkreislaufs 9 verbunden. Es sei angenommen, dass das Kühlmittel, wie durch die beiden zur Pumpe respektive von der Pumpe 10 laufenden Pfeile angegeben, zirkuliert. Das links gezeigte Rohr 12 weist folglich einen Zulaufanschluss 14 und gegenüberliegend einen Ablaufanschluss 15 auf. Das benachbarte Rohr 12 weist an dieser Seite einen Zulaufanschluss 14 und an der gegenüberliegenden Seite einen Ablaufanschluss 15 auf. Die einzelnen Zulauf- und Ablaufanschlüsse 14, 15 sind über ebenfalls außerhalb des Gehäuses 2 angeordnete Verbindungsrohrstücke 16 miteinander verbunden, wobei zwangsläufig jeweils ein Ablaufanschluss 15 mit einem Zulaufanschluss 14 verbunden ist. Auf diese Weise lässt sich eine mäanderförmige Kühlschlagen respektive Kühlkanalstruktur realisieren. Selbstverständlich ist jede Verbindung eines Rohres 12 zu einem Verbindungsrohr 16 über entsprechende Verbindungs- oder Dichtmittel 7 realisiert und entsprechend abgedichtet.

Fig. 4 zeigt eine alternative Ausführungsform einer Wand 3, ebenfalls umfassend einen Metallkörper 11 mit darin eingebetteten oder eingegossenen Kühlmittelleitungen 5 in Form separater Rohre 12, die hier jedoch U-förmig gebogen sind. Hier liegen die Zulauf- und Ablaufanschlüsse 14, 15 alle an einer gemeinsamen Seite, wie Fig. 4 deutlich zeigt. Die Rohre 12, ebenfalls aus Metall wie bevorzugt Stahl, sind in den Metallkörper 11 eingebettet, so dass wiederum keinerlei Verbindungsabschnitte im Gehäuseinneren liegen, vielmehr sind sämtliche Verbindungen, realisiert über die entsprechenden Verbindungselemente 7, außerhalb des Gehäuses vorgesehen. Ersichtlich werden hier weit weniger Verbindungsrohrstücke 16 benötigt, da die entsprechenden Umlenkungen über die U-förmigen Rohre 12 selbst gebildet sind.

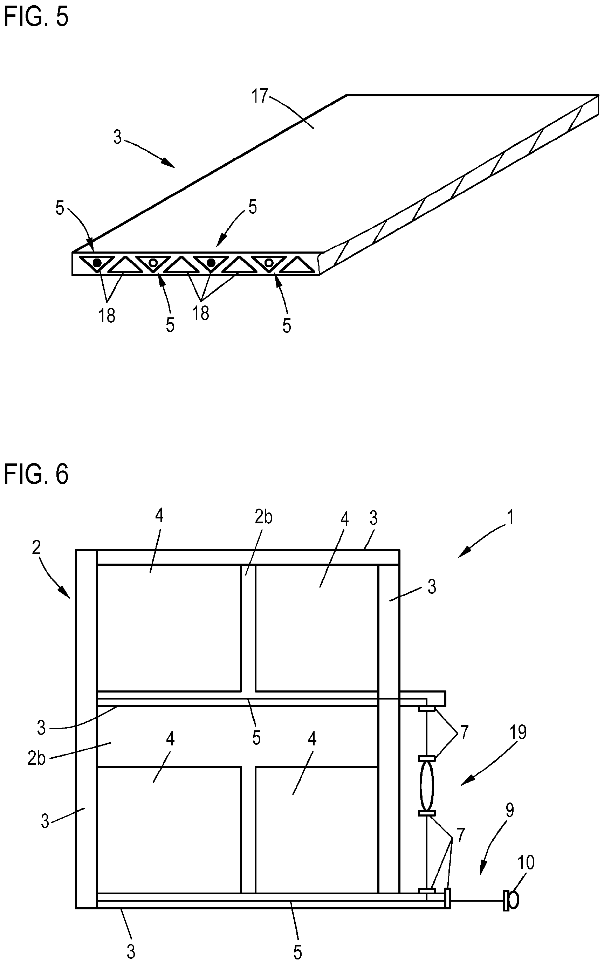

Anstelle der Verwendung einer oder mehrerer Wände umfassend den Metallkörper 11 mit den eingegossenen Metallrohren 12 ist es nicht erfindungsgemäß auch denkbar, zur Bildung einer Wand 3 ein plattenförmiges Strangpressprofil 17 zu verwenden, wie in Fig. 5 gezeigt. Dieses plattenförmige Strangpressprofil 17 weist eine Reihe von Hohlräumen 18 auf, von denen ein Teil oder alle als Kühlmittelleitungen 5 verwendet werden können. Im gezeigten Beispiel ist angenommen, dass jeder zweite Hohlraum 18 als Kühlmittelleitung dient. Die Hohlräume 18 laufen geradlinig und parallel von einer Seite des Strangpressprofils zur gegenüberliegenden Seite, sie werden über entsprechende Verbindungsrohrstücke, die in Fig. 5 nicht näher gezeigt sind, wieder miteinander verbunden. In Fig. 5 ist durch unterschiedliche Symbole die jeweilige Flussrichtung dargestellt. Ein "●"-Symbol definiert eine Fließrichtung in den Hohlraum, das heißt, dass dort ein Zulaufanschluss gegeben ist, während ein "○"-Symbol eine entgegengesetzte Fließrichtung und damit einen Ablaufanschluss an dieser Seite definiert. Die Verbindungsrohrstücke sind wiederum über entsprechende Verbindungs- oder Dichtelement dicht an diese Hohlräume angeschlossen.

Wenngleich in Fig. 5 exemplarisch dreieckförmige Hohlräume gezeigt sind, können selbstverständlich auch andere Hohlraumquerschnittsformen realisiert werden, beispielsweise viereckig oder rund etc.

Wenngleich bei der Prinzipdarstellung in Fig. 1 nur eine Wand 3 aktiv gekühlt werden kann, wäre es selbstverständlich denkbar, auch mehrere Wände in dieser Art auszugestalten. Dies lässt eine aktive mehrseitige Gehäusekühlung zu.

Fig. 6 zeigt schließlich eine Energiespeichereinrichtung 1, umfassend ein größeres Gehäuse 2, das wiederum aus mehreren Wänden 3 besteht, wobei hier eine Zwischenwand 3 vorgesehen ist, über die das Gehäuse 2 in zwei Gehäuseabschnitte 2a und 2b geteilt wird, so dass sich folglich zwei Ebenen ergeben, auf denen Speicherzellen oder Speicherzellenmodule 4 aufgenommen werden können. Im gezeigten Beispiel sind in den Gehäuseabschnitten 2a, 2b entsprechende Speicherzellen oder Speicherzellenmodule 4 dargestellt. Die jeweiligen Wände 3, auf denen die Speicherzellen oder Speicherzellenmodule aufgestellt sind, sind als aktiv kühlbare Wände, insbesondere in einer der zuvor beschriebenen Ausführungsformen, ausgebildet, verfügen also über Kühlleitungen 5.

Gezeigt ist auch der gehäuseextern vorgesehene Kühlmittelkreislauf 9 mit der Pumpte 10, die gegebenenfalls noch zu weiter im Kraftfahrzeug verlegten Kühlmittelleitungen führt respektive mit diesen verbunden ist. Der Kühlmittelkreislauf 9 umfasst hier eine zusätzliche Kühlmittelverteilung 19, die es ermöglicht, das Kühlmittel zwischen den beiden Ebenen, also zwischen der unteren Wand 3 und der oberen Wand 3 respektive deren Kühlmittelleitungen 5 verteilen zu können. Es handelt sich beispielsweise um ein zusätzliches Verbindungsrohr, gegebenenfalls mit integriertem Kühlmittelreservoir, über das ein endseitiger Ablaufanschluss der Wand 3 der unteren Ebene mit einem anfangsseitigen Zulaufanschluss der Wand 3 der oberen Ebene verbunden ist, oder dergleichen. Auf jeden Fall kann über eine solche Kühlmittelverteilung 19 das Kühlmittel zwischen den Ebenen verteilt werden, so dass sie lediglich an einer Stelle einzuspeißen und an einer anderen Stelle wieder abzuführen ist. Auch hier sind die Verbindungs- oder Dichtmittel 7 allesamt außerhalb des Gehäuses angeordnet.

Die Energiespeichereinrichtung 1 kann noch mehrere solcher Gehäuseabteile aufweisen, mithin also noch mehrere Ebenen, so dass noch mehr aktiv kühlbare Wände vorgesehen sein können. Dabei ist darauf hinzuweisen, dass eine aktiv zu kühlende Wand nicht zwangsläufig eine Außenwand des Gehäuses sein muss, vielmehr kann die Wand auch als im Inneren eines Gehäuses liegende Wand ausgeführt sein, mit der ein- oder beidseitig die Speicherzellen oder Speicherzellenmodule thermisch gekoppelt sind.

## Patentansprüche

1. Energiespeichereinrichtung in Form einer Hochvoltbatterie umfassend ein Gehäuse (2) mit einer oder mehreren darin aufgenommenen Speicherzellen oder Speicherzellmodulen sowie eine oder mehrere Kühlmittelleitungen (5), durch die ein über einen Kühlmittelkreislauf strömendes Kühlmittel fließt, wobei die eine oder die mehreren Kühlmittelleitungen (5) in eine oder mehrere Wände (3) des Gehäuses (2) integriert sind und gehäuseseitig ununterbrochen von einem außerhalb des Gehäuses (2) liegenden Zulaufanschluss (14) zu einem ebenfalls außerhalb des Gehäuses (2) liegenden Ablaufanschluss (15) laufen, wobei die eine oder die mehreren Kühlmittelleitungen (5) durch Rohre (12) gebildet sind, die in die eine oder die mehreren Wände (3) vollständig eingespritzt oder eingegossen sind.

2. Energiespeichereinrichtung nach Anspruch 1,
**dadurch gekennzeichnet,**
**dass** die Rohre (12) U-förmig in der Wand (3) verlaufen und nur an einer Seite münden, wobei das eine Rohrende einen Zulaufanschluss (14) und das andere Rohrende einen Ablaufanschluss (15) bildet, wobei die Rohrenden zweier Rohre (12) über außerhalb des Gehäuses (2) angeordnete Verbindungsrohrstücke (16) miteinander verbunden sind.

3. Energiespeichereinrichtung nach Anspruch 1,
**dadurch gekennzeichnet,**
**dass** die Rohre (12) geradlinig in der Wand (3) verlaufen und beidseits münden, wobei das eine Rohrende einen Zulaufanschluss (14) und das andere Rohrende einen Ablaufanschluss (15) bildet, wobei die Rohrenden zweier Rohre über außerhalb des Gehäuses (2) angeordnet Verbindungsrohrstücke (16) miteinander verbunden sind.

4. Energiespeichereinrichtung nach einem der vorangehenden Ansprüche,
**dadurch gekennzeichnet,**
**dass** das Gehäuse (2) mehrere Ebenen, in denen jeweils ein oder mehrere Speicherzellen oder Speicherzellenmodule (4) angeordnet sind, aufweist, wobei in jeder Ebene eine oder mehrere Kühlmittelleitungen (5) vorgesehen sind, die außerhalb des Gehäuses (2) miteinander über den Kühlmittelkreislauf verbunden sind.

## Claims

1. Energy storage device in the form of a high-voltage battery comprising a housing (2) having one or several storage cells or storage cell modules accommodated therein and one or several cooling means lines (5) through which runs a cooling means flowing via a cooling means circuit, wherein the one or the several cooling means lines (5) are integrated in one or several walls (3) of the housing (2) and on the housing side run in an uninterrupted manner from an inlet connection (14) situated outside the housing (2) to an outlet connection (15) also situated outside the housing (2), wherein the one or the several cooling means lines (5) are formed by pipes (12) which are completely injection-moulded or cast into the one or the several walls (3).

2. Energy storage device according to claim 1,
**characterised in**
**that** the pipes (12) run in a U-shaped manner in the wall (3) and open out only on one side, wherein the one pipe end forms an inlet connection (14) and the other pipe end forms an outlet connection (15), wherein the pipe ends of two pipes (12) are connected with one another via pipe connection pieces (16) disposed outside the housing (2).

3. Energy storage device according to claim 1,
**characterised in**
**that** the pipes (12) run in a straight line in the wall (3) and open out on both sides, wherein the one pipe end forms an inlet connection (14) and the other pipe ends forms an outlet connection (15), wherein the pipe ends of two pipes are connected with one another via pipe connection pieces (16) disposed outside the housing (2).

4. Energy storage device according to any of the preceding claims,
**characterised in**
**that** the housing (2) has several planes in which in each case one or several storage cells or storage cell modules (4) are disposed, wherein in each plane are provided one or several cooling means lines (5) which are connected with one another via the cooling means circuit outside the housing (2).

## Revendications

1. Dispositif accumulateur d'énergie sous la forme d'une batterie haute tension comprenant un boîtier (2) avec une ou plusieurs cellules d'accumulateur ou modules de cellule d'accumulateur reçus dans celui-ci ainsi qu'une ou plusieurs conduites de moyen de refroidissement (5) par lesquelles s'écoule un moyen de refroidissement s'écoulant par un circuit de moyen de refroidissement, dans lequel les une ou les plusieurs conduites de moyen de refroidissement (5) sont intégrées dans une ou plusieurs parois (3) du boîtier (2) et parcourent côté boîtier sans interruption un raccord d'amenée (14) se trouvant en dehors du boîtier (2) à un raccord d'évacuation (15) se trouvant aussi en dehors du boîtier (2), dans lequel les une ou les plusieurs conduites de moyen de refroidissement (5) sont formées par des tubes (12) qui sont moulés par injection ou coulés complètement dans les une ou les plusieurs parois (3).

2. Dispositif accumulateur d'énergie selon la revendication 1,
**caractérisé en ce**
**que** les tubes (12) s'étendant en forme de U dans la paroi (3) et débouchent seulement sur un côté, dans lequel l'une extrémité de tube forme un raccord d'amenée (14) et l'autre extrémité de tube forme un raccord d'évacuation (15), dans lequel les extrémités de tube de deux tubes (12) sont raccordées entre elles par des pièces de tube de raccordement (16) agencées en dehors du boîtier (2).

3. Dispositif accumulateur d'énergie selon la revendication 1,
**caractérisé en ce**
**que** les tubes (12) s'étendent en ligne droite dans la paroi (3) et débouchent de part et d'autre, dans lequel l'une extrémité de tube forme un raccord d'amenée (14) et l'autre extrémité de tube forme un raccord d'évacuation (15), dans lequel les extrémités de tube de deux tubes sont raccordées entre elles par des pièces de tube de raccordement (16) agencées en dehors du boîtier (2).

4. Dispositif accumulateur d'énergie selon l'une quelconque des revendications précédentes,
**caractérisé en ce**
**que** le boîtier (2) présente plusieurs plans dans lesquels respectivement une ou plusieurs cellules d'accumulateur ou modules de cellule d'accumulateur (4) sont agencés, dans lequel une ou plusieurs conduites de moyen de refroidissement (5) sont prévues dans chaque plan, lesquelles sont raccordées en dehors du boîtier (2) l'une à l'autre par le biais du circuit de moyen de refroidissement.
